# EUROPÄISCHE PATENTSCHRIFT

(11) **EP 3 554 744 B1**
(45) Veröffentlichungstag und Bekanntmachung des Hinweises auf die Patenterteilung: **26.08.2020**
(21) Anmeldenummer: 17808939.7
(22) Anmeldetag: 06.12.2017
(51) Int. Cl.: B22D 11/18, B22D 11/20

(54) **VERFAHREN UND VORRICHTUNG ZUM REGELN EINER STRANGGIESSANLAGE**
METHOD AND DEVICE FOR REGULATING A STRAND CASTING SYSTEM
PROCÉDÉ ET DISPOSITIF DE RÉGULATION D'UNE INSTALLATION DE COULÉE CONTINUE

(30) Priorität: 13.12.2016 AT 511332016
(43) Veröffentlichungstag der Anmeldung: 23.10.2019
(73) Patentinhaber: Primetals Technologies Austria GmbH, 4031 Linz (AT)
(72) Erfinder: WIESER, Philipp, 4521 Schiedlberg (AT); DOLLHÄUBL, Paul Felix, 4180 Zwettl an der Rodl (AT); WATZINGER, Josef, 4204 Reichenau im Muehlkreis (AT)
(74) Vertreter: Metals@Linz
(86) Internationale Anmeldenummer: PCT/EP2017/081615
(87) Internationale Veröffentlichungsnummer: WO 2018/108652

(56) Entgegenhaltungen:
- DE-A1- 19 745 547
- DE-A1-102004 002 783
- DE-A1-102008 025 548

## Beschreibung

### Technisches Gebiet

Die vorliegende Erfindung betrifft ein Verfahren zum Regeln einer Stranggießanlage,
wobei die Stranggießanlage eine Kokille und eine der Kokille nachgeordnete Strangführung aufweist,
wobei in die Kokille, insbesondere über eine Zuflusseinrichtung, flüssiges Metall gegossen wird, das an Wänden der Kokille erstarrt, so dass sich ein Metallstrang mit einer erstarrten Strangschale und einem noch flüssigem Kern bildet,
wobei der Metallstrang mittels beabstandet angeordneter Rollen der Strangführung aus der Kokille ausgezogen wird, wobei eine Messgröße ermittelt wird, die mit der Schwankung des sich in der Kokille ausbildenden Gießspiegels korreliert, diese Messgröße unter Einbindung von zumindest einer Rechenvorschrift verarbeitet und zur Verringerung der Schwankungen des Gießspiegels herangezogen wird. Die Erfindung umfasst auch eine entsprechende Vorrichtung.

Das Verfahren kann beim kontinuierlichen Stranggießen eingesetzt werden. Generell kann das Verfahren bei allen Stranggießverfahren mit hohen Gießgeschwindigkeiten vorteilhaft angewendet werden, weil hier eine hochdynamische Regelung/Steuerung des Gießspiegels verstärkt notwendig ist.

### Stand der Technik

Beim kontinuierlichen Stranggießen ist es aus metallurgischer Sicht für die Ausbildung einer einheitlichen rissfreien Strangschale und einer homogenen, fehlerfreien Bramme generell von großer Bedeutung, dass Gießspiegelschwankungen in einem geforderten engen Toleranzbereich liegen.

Aufgrund der verschieden Phänomene, die den Gießspiegel beeinflussen, ist eine Regelung notwendig, um diesen konstant zu halten. Zu diesen Phänomenen zählen
1. Transiente Flüsse in die Kokille über die Zuflusseinrichtung:
   - Verstopfen der Zuflusseinrichtung, die als Stopfen oder Schieber ausbildet sein kann, Verstopfen des Tauchrohres bzw. das Loslösen und Freispülen dieser Verstopfungen,
   - Änderungen der Spülgasmenge (bei Stopfen wird meist in der Stopfenmitte Argon zur Erzeugung eines Überdrucks im Tauchrohr (Verhindern der Ansaugung von Luft) eingeblasen, was Turbulenzen im Stahlbad in der Kokille verursachen kann),
   - Verteilergewichtsschwankungen verursacht z.B. durch nicht ideale Regelung des Zuflusses der Pfanne in den Verteiler (Verteiler=Zwischengefäß zwischen Pfanne und Kokille). Durch diese Druckänderung wird bei gleicher Stopfenöffnung ein anderer Durchfluss erzeugt, welchem mit Regelung entgegengewirkt werden muss,
   - Viskositätsänderung des Stahls bei z.B. Pfannenwechsel.
2. Veränderung des Volumens an Flüssigstahl in der Kokille:
   - Formatänderung in der Kokille
   - Gießspiegel-Sollwertänderung (z.B. um Verschleißerscheinungen an dem Tauchrohr zu reduzieren)
3. Transiente Flüsse aus der Kokille:
   - Strangpumpen
   - Gießgeschwindigkeitsänderungen
   - Verbogene Rollen
   - Beabsichtigte Änderungen des Gießspaltes (z.B. Soft reduction)

All diese angeführten Phänomene führen zu Änderungen im Gießspiegel und diesen Änderungen muss entgegengewirkt werden. Da viele der Phänomene sehr plötzlich und unerwartet auftreten, spielt die Dynamik der Regelung eine sehr große Rolle.

Vermehrt bei speziellen Stahlqualitäten, z. B. peritektischen Stählen oder ferritischen rostfreien Stählen, kommt es während des kontinuierlichen Gießvorganges zu einem unregelmäßig auftretenden Heben und Senken des Badspiegels (=zyklisch), das als "Strangpumpen" ("bulging", "mold level hunting") bekannt ist. Beim Strangpumpen ist ein ermittelbarer Zusammenhang zwischen einer mit dem Strangpumpen korrelierenden Messgröße und der Gießspiegelbewegung feststellbar. Es ist ein Merkmal dieser zyklisch auftretenden Störung, dass sie bei einer bestimmten Gießgeschwindigkeit mit einer Periodendauer auftritt, die in etwa der durchschnittlichen Rollenteilung (also dem Abstand der Rollen in Transportrichtung des Strangs) mindestens eines Bereiches der Strangführung entspricht. Im besonderen Maße tritt das Strangpumpen bei Stranggießanlagen auf, bei denen die Rollenteilung in der Strangführung über längere Abschnitte konstant ist (also mehrere in Transportrichtung des Strangs aufeinanderfolgende Rollen den gleichen Abstand zueinander haben). Neben der Grundwelle treten auch harmonische Oberwellen auf. Es konnte festgestellt werden, dass das Strangpumpen nur oberhalb einer empirisch zu ermittelnden kritischen Gießgeschwindigkeit auftritt, die wiederum von verwendetem Betriebsmittel und von der Betriebsweise abhängt. Eine Beschränkung der Gießgeschwindigkeit ist jedoch aus Sicht eines steten Trends zu Kapazitätssteigerungen nicht akzeptabel.

Ein regeltechnisches Verfahren zur Dämpfung der Bad- oder Gießspiegelschwankungen ist etwa bereits aus der DE 102 14 497 A1 bekannt. Bei diesem Verfahren wird an einer oder mehreren Treiberrollen die Stromaufnahme gemessen und die Stromaufnahme-Messwerte als Korrekturwert für die Mengenregelung bei der Zufuhr der Metallschmelze vom Zwischengefäß in die Stranggießkokille berücksichtigt, indem der Stromaufnahme-Messwert als Störgröße in einen Regelkreis aufgeschaltet wird. Änderungen in der Stromaufnahme, die beispielsweise durch eine Änderung der Gießgeschwindigkeit hervorgerufen werden, oder zyklisch wiederkehrende Störungen der Stromaufnahme-Werte, beispielsweise hervorgerufen durch Rollenschläge unrund laufender Treiberrollen, werden vorab aus dem gemessenen Stromaufnahme-Signal herausgefiltert. Das beschriebene Regelverfahren ist jedoch nicht geeignet, beispielsweise Eingangstotzeiten zu kompensieren, sodass stets nur ein Teil der auf das Strangpumpen zurückführbaren Badspiegelbewegungen beseitigt werden kann.

Aus der Patentanmeldung A 50301/2016 ist ein Regelverfahren für den Gießspiegel einer Stranggießanlage bekannt, wo die Höhe des Gießspiegels, der Sollwert für die Höhe des Gießspiegels sowie weitere Signale und die vorläufige oder eine endgültige Sollstellung einem Regler zugeführt werden und der Regler einen Kompensationswert ermittelt, der auf die vorläufige Sollstellung aufgeschaltet wird, so dass die endgültige Sollstellung, anhand derer in Verbindung mit der Iststellung der Zuflusseinrichtung eine Stellgröße für die Zuflusseinrichtung der Kokille ermittelt wird, mit der um den Kompensationswert korrigierten vorläufigen Sollstellung korrespondiert.

Aus der WO 2010/149 419 A1 ist ein Regelverfahren bekannt, wo der Beobachter ein Modell der Stranggießkokille umfasst, mittels dessen der Beobachter einen Erwartungswert für den Gießspiegel ermittelt. Der Beobachter weist eine Anzahl von Schwingungskompensatoren auf, mittels derer anhand der Differenz der Höhe des Gießspiegels vom Erwartungswert jeweils ein auf eine jeweilige Störfrequenz bezogener Störanteil ermittelt wird. Die Summe der Störanteile entspricht dem Kompensationswert.

Bei den genannten Veröffentlichungen ist die Regelung des Gießspiegels durch die Einstellung der Zuflusseinrichtung der Kokille verwirklicht, welche nur eine niedrige Dynamik aufweist. Damit ist es nicht möglich, beispielsweise die beim kontinuierlichen Stranggießen ab einer Geschwindigkeit von größer gleich 2m/min auftretenden Frequenzen von größer gleich 0,6 Hz auszugleichen, welche Unregelmäßigkeiten im Stahlerzeugnis verursachen und somit die Qualität des Erzeugnisses mindern. Bislang wurde das Problem des "high frequency bulging", also der Wölbungskompensation des Strangpumpens mit Frequenzen größer gleich 0,6 Hz, noch nicht in den Dokumenten des Stands der Technik gelöst.

### Aufgabe der Erfindung

Es ist daher eine Aufgabe der vorliegenden Erfindung die Nachteile des Stands der Technik zu überwinden und ein Verfahren zum Regeln einer Stranggießanlage vorzuschlagen, mittels dem eine höhere Dynamik und eine bessere Güte des Gießspiegels erreicht werden kann. Insbesondere sollen mit dem Verfahren Schwingungen des Strangpumpens auch in einem Frequenzbereich größer gleich 0,6 Hz ausgeglichen werden können.

### Darstellung der Erfindung

Diese Aufgabe wird erfindungsgemäß gelöst durch ein Verfahren zum Regeln einer Stranggießanlage,
wobei die Stranggießanlage eine Kokille und eine der Kokille nachgeordnete Strangführung aufweist,
wobei in die Kokille, insbesondere über eine Zuflusseinrichtung, flüssiges Metall gegossen wird, das an Wänden der Kokille erstarrt, so dass sich ein Metallstrang mit einer erstarrten Strangschale und einem noch flüssigem Kern bildet,
wobei der Metallstrang mittels beabstandet angeordneter Rollen der Strangführung aus der Kokille ausgezogen wird, wobei eine Messgröße ermittelt wird, die mit der Schwankung des sich in der Kokille ausbildenden Gießspiegels korreliert, diese Messgröße unter Einbindung von zumindest einer Rechenvorschrift verarbeitet und zur Verringerung der Schwankungen des Gießspiegels herangezogen wird. Dabei ist vorgesehen, dass zur Verringerung der Schwankungen des Gießspiegels der gegenseitige Abstand von einander gegenüberliegenden Rollen der Strangführung vor dem Durcherstarrungspunkt zyklisch geändert wird, nämlich durch zyklische, den Schwankungen des Gießspiegels gegenläufige Änderung des Rollenabstands von einander gegenüberliegenden Rollen der Strangführung.

Es wird somit durch die Rechenvorschrift mittels der angestellten Rollen der Strangführung eine die Schwankungen ausregelnde Bewegung bewirkt. Der gegenseitige Abstand von einander gegenüberliegenden Rollen, zwischen denen der Strang geführt wird, wirkt sich direkt auf den flüssigen Kern des Strangs aus und verändert direkt den Gießspiegel, die Schwankungen des Gießspiegels werden sofort korrigiert. Dadurch wird eine genauere und dynamischere Regelung des Gießspiegels ermöglicht. Geringere Schwankungen des Gießspiegels bewirken wieder eine Qualitätsverbesserung des Strangs bzw. des Brammenendprodukts, wie z.B. eine Reduktion von Einschlüssen oder eine Rissvermeidung. Somit können auch phasenrichtig Schwingungen mit höheren Frequenzen durch Änderungen des Rollenabstands erzeugt werden. Die Bewegung der Zuflusseinrichtung hingegen, welche die Menge an flüssigem Metall festlegt, die in die Kokille gelangt, überträgt sich langsamer auf den Gießspiegel, weil ja noch unterhalb der Zuflusseinrichtung befindliches flüssiges Metall in die Kokille strömt, wenn die Stellung der Zuflusseinrichtung geändert wird. Insofern kann mit der Zuflusseinrichtung ein phasenrichtiges Ändern der Stellung der Zuflusseinrichtung nur bei niedrigeren Frequenzen erreicht werden bzw. kann durch diese zusätzliche, nicht kompensierbare Dynamik nur eine geringere Reglergüte erreicht werden.

Erfindungsgemäß kann durch die Änderung des gegenseitigen Abstands von einander gegenüberliegenden Rollen eine Steuerung bzw. Regelung des Gießspiegels erreicht werden. Zwischen einander gegenüberliegenden Rollen liegt der Strang.

Das Verfahren benötigt lediglich anstellbare Rollen, welche vor dem Durcherstarrungspunkt angeordnet sind. Der Durcherstarrungspunkt ist, längs der Strangführung gesehen, jener Ort, wo der Kern des Strangs bzw. der Bramme bereits fest ist. Eine Regelung oder Steuerung des Gießspiegels ist aber nur vor der Durcherstarrung möglich, also dort, wo der Strang bzw. die Bramme im Kern noch flüssig ist. Die Rollen, deren gegenseitiger Abstand zur Verringerung der Schwankungen des Gießspiegels geändert wird, können, müssen aber nicht jene Rollen sein, die angetrieben sind, um den Metallstrang aus der Kokille zu ziehen.

Der gegenseitige Abstand von einander gegenüberliegenden Rollen der Strangführung wird erfindungsgemäß zyklisch geändert. "Zyklisch geändert" bedeutet, dass einander gegenüberliegende Rollen periodisch ihren gegenseitigen Abstand zueinander ändern.

Dabei kann das erfindungsgemäße Verfahren als einziges Regel- bzw. Steuerverfahren für den Gießspiegel eingesetzt werden (in Kombination mit der Durchflussregelung der Zuflusseinrichtung), oder auch in Kombination mit anderen Regel- bzw. Steuerverfahren für den Gießspiegel durch die Zuflusseinrichtung. Bei einer Kombination von Regel- bzw. Steuerverfahren können die einzelnen Regel- bzw. Steuerverfahren unabhängig voneinander betrieben werden.

Insbesondere wenn (auch) das Strangpumpen ("Bulging") ausgeglichen werden soll, können die zyklischen Änderungen in einem Frequenzbereich bis zu größer gleich 0,6 Hz, vorzugsweise bis 5 Hz, liegen. Die Änderung des Rollenabstands kann also mit Frequenzen erfolgen, die auch größer gleich 0,6 Hz sind, die insbesondere bis zu 5 Hz betragen.

So können etwa, falls nur das auf die Rollen wirkende Regel- bzw. Steuerverfahren angewendet wird, die zyklischen Änderungen des Rollenabstands im Frequenzbereich von 0 bis 0,6 Hz, von 0 bis 1 Hz, von 0 bis 2 Hz, von 0 bis 3 Hz, von 0 bis 4 Hz oder von 0 bis 5 Hz liegen. Wenn das erfindungsgemäße Regel- bzw. Steuerverfahren zur Verringerung der Schwankungen des Gießspiegels mit anderen Regel- bzw. Steuerverfahren zur Verringerung der Schwankungen des Gießspiegels kombiniert wird, etwa mit den eingangs genannten Regelverfahren unter Verwendung der Zuflusseinrichtung der Kokille, so könnte das bzw. könnten die anderen Verfahren einen niedrigeren Frequenzbereich abdecken (z.B. von 0 bis 0,6 Hz), während das erfindungsgemäße Verfahren nur den höheren Frequenzbereich abdeckt (z.B. von 0,6 bis 1 Hz, von 0,6 bis 2 Hz, von 0,6 bis 3 Hz, von 0,6 bis 4 Hz oder von 0,6 bis 5 Hz) .

In einer weiteren bevorzugten Ausführungsvariante des erfindungsgemäßen Verfahrens ist es vorgesehen, dass entlang der Strangführung beidseitig (also bezüglich des Strangs einander gegenüberliegend) mehrere Rollensegmente mit jeweils einer oder mehreren Rollen angeordnet sind, wobei zumindest ein Rollensegment normal zur Strangführungsrichtung verstellt wird. Der Begriff Rollensegment inkludiert auch sogenannte Gitter (="Grids") welche typischer Weise direkt unterhalb der Kokille angeordnet sind. Mit "normal zur Strangführungsrichtung" ist hier jede Verstellung gemeint, die im Wesentlichen normal zur Strangführungsrichtung verläuft. Dies umfasst sowohl ein Verschwenken als auch ein paralleles Verschieben eines Rollensegments. Die Strangführung ist in der Regel längs der Strangführungsrichtung in mehrere Segmente unterteilt, jedes Segment enthält zwei einander gegenüberliegende Rollensegmente.

Vorteilhaft wird ein nahe der Kokille angeordnetes Rollensegment verstellt. Insofern kann vorgesehen sein, dass zumindest ein Rollensegment des ersten Segments verstellt wird. Es kann also vorgesehen sein, dass das oberste, also der Kokille am nächsten liegende, Rollensegment verstellt wird. Die große Verstärkung vom Aktor, der direkt eingreift, ermöglicht höchste Dynamik. Der Faktor bezüglich der Änderung des Rollenabstands im obersten Segment und sein Einfluss auf den Gießspiegel beträgt typischer Weise etwa 1:10 (schwenkbare Segmente) bzw. 1:20 (parallel verfahrende Segmente). Das bedeutet, dass durch eine Vergrößerung des Rollenabstands von 0,1 mm ein Fall des Gießspiegels in der Kokille um 1mm bzw. 2mm bewirkt wird. Hierdurch werden nur kleine Änderungen des Rollenabstands benötigt, welche in sehr kurzer Zeit bewerkstelligt werden können, um hohe Frequenzen des Strangpumpens mit bis zu 5 Hz kompensieren zu können.

Durch die selektive Verstellung von einzelnen Rollensegmenten mit jeweils mehreren Rollen normal zur Strangführungsrichtung wird der Abstand zwischen gegenüber angeordneten Rollen den Schwankungen des Gießspiegels gegenläufig verringert, um Frequenzen der Schwankungen des Gießspiegels zu kompensieren. Durch diese Kompensation wird die Stabilität des kontinuierlichen Stranggießens deutlich erhöht und bei gleichbleibender Qualität des Stahlerzeugnisses werden hohe Gießgeschwindigkeiten ermöglicht.

Gemäß einer bevorzugten Ausführungsvariante des erfindungsgemäßen Verfahrens ist vorgesehen, dass zumindest ein Rollensegment verschwenkt wird. Die Schwenkachse liegt dabei vorzugsweise näher an der Kokille, sodass der von der Kokille weiter entfernte Teil des Rollensegments stärker ausgelenkt wird. Das äußere Rollensegment, also jenes an der nach außen gekrümmten Seite der Strangführung, könnte dabei fix sein, etwa durch einen feststehenden Außenrahmen verwirklicht sein. Das gegenüberliegende Rollensegment, also jenes an der nach innen gekrümmten Seite der Strangführung, wird verschwenkt. Es weist dazu z.B. einen Innenrahmen auf, der die Rollen trägt und der verschwenkbar gelagert ist. Denkbar wäre aber auch, dass das innere Rollensegment fix angebracht ist und das äußere Rollensegment gegenüber dem inneren Rollensegment verschwenkt wird.

Alternativ zum Verschwenken von Rollensegmenten kann vorgesehen sein, dass zumindest ein Rollensegment in paralleler Ausrichtung zu einem gegenüber liegenden, entlang der Strangführung angeordneten Rollensegment verstellt wird, wodurch wiederum eine selektive Anpassung des Rollenabstands zwischen einzelnen Rollensegmenten und Rollen ermöglicht wird. Das äußere Rollensegment, also jenes an der nach außen gekrümmten Seite der Strangführung, könnte dabei fix sein, etwa durch einen feststehenden Außenrahmen verwirklicht sein. Das gegenüberliegende Rollensegment, also jenes an der nach innen gekrümmten Seite der Strangführung, wird dann in Richtung des äußeren Rollensegments translatorisch verschoben. Denkbar wäre auch hier, dass umgekehrt das innere Rollensegment fix ist, während das gegenüberliegende äußere Rollensegment translatorisch verschoben wird.

Durch den Abstand der Rollen zweier gegenüberliegender Rollensegmente kann das Volumen an flüssigem Metall im Kern des Stranges ermittelt und somit ein Rückschluss auf eine relative Gießspiegeländerung gezogen werden.

Gemäß einer besonders bevorzugten Ausführungsvariante des erfindungsgemäßen Verfahrens wird zumindest ein Rollensegment durch eine Verstellvorrichtung verstellt, welche zumindest einen hydraulischen oder elektromechanischen Aktuator (z.B. Hydraulikzylinder oder elektrischer Spindelantrieb) umfasst. Um eine optimale Reaktionszeit bezüglich der Einstellung des Rollenabstands im Hinblick auf Gießspiegelschwankungen zu ermöglichen, wird vorzugsweise ein Proportionalventil für zumindest einen hydraulischen Zylinder verwendet.

Eine Ausführungsform der Erfindung sieht vor, dass eine oder mehrere Frequenzen der Schwankungen des Gießspiegels in einem Frequenzbereich von 0 bis 5Hz, vorzugsweise gleichzeitig, detektiert und die Schwankungen mittels zyklisch gegenläufiger Änderung des Rollenabstands von Rollen der Strangführung ausgeglichen werden.

Eine dazu alternative Ausführungsform der Erfindung sieht vor, dass eine oder mehrere Frequenzen der Schwankungen des Gießspiegels in einem ersten Frequenzbereich, vorzugweise gleichzeitig, detektiert werden und die Schwankungen mittels zyklisch gegenläufiger Bewegungen der Zuflusseinrichtung (der Kokille) ausgeglichen werden, weitere Frequenzen der Schwankungen des Gießspiegels in einem zweiten Frequenzbereich detektiert und die Schwankungen mittels zyklisch gegenläufiger Änderung des Rollenabstands von Rollen der Strangführung ausgeglichen werden, wobei der zweite Frequenzbereich über dem ersten Frequenzbereich liegt.

Diese Ausführungsvariante hat den Vorteil, dass niederfrequente Schwankungen des Gießspiegels, wie bisher, durch Regelung der Zuflusseinrichtung der Kokille ausgeglichen werden können, während nur die höherfrequenten Schwankungen des Gießspiegels durch die Regelung des Abstands der Rollen ausgeglichen werden. Es besteht somit die Möglichkeit bestehende Regelungen für die niederfrequenten Schwankungen mit einer zusätzlichen Regelung des Abstands der Rollen nachzurüsten.

Dabei könnten entweder die Regelung für die Zuflusseinrichtung und/oder die Regelung für den Rollenabstand mit Hilfe eines sogenannten Beobachters realisiert werden, wie dies in der A 50301/2016 gezeigt ist. Unter einem Beobachter versteht man entsprechend der Regelungstechnik ein System, das aus bekannten Eingangsgrößen (z. B. Stellgrößen oder messbaren Störgrößen) und Ausgangsgrößen (Messgrößen) eines beobachteten Referenzsystems nicht messbare Größen (Zustände) rekonstruiert. Dazu bildet er das beobachtete Referenzsystem als Modell nach und führt mit einem Regler die messbaren, und deshalb mit dem Referenzsystem vergleichbaren, Zustandsgrößen nach. So wird vermieden, dass ein Modell einen über die Zeit wachsenden Fehler generiert.

Vorzugsweise weist die Verfahrensvariante mit zwei Frequenzbereichen einen ersten Beobachter auf, der einen ersten Kompensationswert für eine Sollstellung der Zuflusseinrichtung auf Basis von Frequenzen des ersten Frequenzbereichs ermittelt, und einen zweiten Beobachter, der einen zweiten Kompensationswert für den Rollenabstand der Rollen der Strangführung auf Basis von Frequenzen des zweiten Frequenzbereichs ermittelt.

Hierdurch wird der Gießspiegel in der Kokille sowohl durch den Zufluss in die Kokille als auch durch die Führung des Metallstranges, vorzugsweise im obersten Segment, nach der Kokille geregelt. Außerdem ist vorteilhaft, dass durch die Separation der Beobachter auf verschiedene Aktuatoren (einerseits der erste Kompensationswert für die Sollstellung der Zuflusseinrichtung im Fall des ersten Beobachters und andererseits der zweite Kompensationswert für den Rollenabstand der Rollen der Strangführung), keine Störung zwischen den Beobachtern beziehungsweise keine negative Beeinflussung der Beobachter untereinander entstehen kann.

In einer besonders bevorzugten Ausführungsvariante des Verfahrens mit zwei Frequenzbereichen arbeitet der erste Beobachter in einem Frequenzbereich kleiner gleich 0,6 Hz und der zweite Beobachter in einem Frequenzbereich von größer gleich 0,6 Hz, vorzugsweise zwischen 0,6 bis 5 Hz,. Durch die getrennten Frequenzbereiche der zwei Beobachter ergibt sich der Vorteil, dass es nicht zu Interferenzen zwischen den Beobachtern durch Überlappung der Frequenzfenster kommen kann, wodurch zum Beispiel der Sollwert für den Aktuator der Gießspiegelregelung gleich bleibt (im Falle keiner Wölbungen) oder kleiner als im Falle ohne sekundärer Kompensation. Hierdurch werden Gießspiegelschwankungen zusätzlich reduziert und Qualitätsverluste des Stahlerzeugnisses stark vermindert. Hierzu gilt es zu erwähnen, dass im Stand der Technik bislang kein Verfahren bekannt ist, welches Frequenzen der Schwankungen des Gießspiegels von größer gleich 0,6 Hz kompensieren kann, weshalb durch die Verwendung des erfindungsgemäßen Verfahrens hohe Gießgeschwindigkeiten bei hoher Qualität des Stahlerzeugnisses verwendet werden können, wodurch sich die Produktivität von Anlagen zum kontinuierlichen Strangguss bzw. zur kontinuierlichen Banderzeugung deutlich erhöht.

Eine mögliche Vorrichtung zur Durchführung des erfindungsgemäßen Verfahrens umfasst Mittel zur Einbringung einer Metallschmelze in eine Kokille, eine Strangführung umfassend Rollen und eine Messeinrichtung zur Messung von Schwankungen des Gießspiegels, die mit einer Steuereinrichtung verbunden ist. Dabei ist eine mit der Steuereinrichtung verbundene Verstellvorrichtung vorgesehen, welche dazu ausgebildet ist Schwankungen des Gießspiegels durch zyklische, den Schwankungen des Gießspiegels gegenläufige Änderung des Rollenabstands von einander gegenüberliegenden Rollen der Strangführung zu verringern, insbesondere auszugleichen.

Wie bereits im Zusammenhang mit dem Verfahren besprochen, kann vorgesehen sein, dass die Verstellvorrichtung für zyklische Änderungen des Rollenabstands in einem Frequenzbereich bis zu größer gleich 0,6 Hz, vorzugsweise bis 5 Hz, ausgelegt ist. Die Verstellvorrichtung kann zumindest einen hydraulischen oder elektromechanischen Aktuator, wie einen hydraulischen Zylinder oder einen elektrischen Spindelantrieb, umfassen. Selbstverständlich kann die Verstellvorrichtung für zyklische Änderungen des Rollenabstands in einem Frequenzbereich ab 0 Hz, vorzugsweise bis 5 Hz, ausgelegt sein, etwa ebenso mit hydraulischen oder elektromechanischen Aktuatoren, wie einem hydraulischen Zylinder oder einem elektrischen Spindelantrieb.

Wie ebenfalls bereits im Zusammenhang mit dem Verfahren besprochen, kann vorgesehen sein, dass entlang der Strangführung beidseitig mehrere Rollensegmente mit jeweils einer oder mehreren Rollen angeordnet sind, wobei zumindest ein Rollensegment mittels der Verstellvorrichtung normal zur Strangführungsrichtung verstellbar ist.

Beispielsweise kann im obersten, also ersten, Segment zumindest ein Rollensegment verstellbar sein. Dabei kann zumindest ein Rollensegment verschwenkbar sein. Oder zumindest ein Rollensegment ist in paralleler Ausrichtung zu einem gegenüber liegenden, entlang der Strangführung angeordneten Rollensegment verstellbar. Vorzugsweise werden die Rollensegmente so verstellt, dass keine sprunghaften Segmentübergänge (=Dickenänderungen) entstehen, dies wird "verlinkt verfahren" genannt.

Entsprechend zur Verfahrensvariante mit zwei Frequenzbereichen sieht eine Variante der erfindungsgemäßen Vorrichtung vor, dass mittels der Messeinrichtung eine oder mehrere Frequenzen der Schwankungen des Gießspiegels in einem ersten Frequenzbereich, vorzugsweise gleichzeitig, detektierbar sind und diese Schwankungen mittels zyklisch gegenläufiger Bewegungen einer Zuflusseinrichtung der Kokille ausgleichbar sind, und dass mittels der Messeinrichtung weitere Frequenzen der Schwankungen des Gießspiegels in einem zweiten Frequenzbereich detektierbar sind und diese Schwankungen mittels zyklisch gegenläufiger Änderung des Rollenabstands von Rollen der Strangführung mittels der Verstellvorrichtung ausgleichbar sind, wobei der zweite Frequenzbereich über dem ersten Frequenzbereich liegt.

Dies kann beispielsweise wieder mittels eines ersten und/oder eines zweiten Beobachters ausgeführt sein. Der zweite Beobachter umfasst die gleichen Bestandteile wie der erste Beobachter und funktioniert analog, mit dem Unterschied, dass er einen zweiten Kompensationswert vorgibt, und zwar nicht der Zuflusseinrichtung für die Kokille, sondern der Verstellvorrichtung, die sich in - vorzugsweise dem obersten Segment - der Strangführung befindet.

Das erfindungsgemäße Verfahren bzw. die erfindungsgemäße Vorrichtung ist auf bestehende Stranggießanlagen mit obig genannten Anforderungen anwendbar und stellt eine deutliche Verbesserung der Qualität von kontinuierlich gegossenem Stahl bei einer deutlich höheren Gießgeschwindigkeit und dadurch gesteigerten Produktivität dar. Durch diese neue Art der Gießspiegelregelung wird es ermöglicht hochdynamische Effekte, die bis dato nicht ausregelbar waren, zu unterdrücken, z.B. hochdynamisches Strangpumpen mit Frequenzen über 0,6 Hz.

### Kurzbeschreibung der Figuren

Die Erfindung wird nun anhand eines Ausführungsbeispiels näher erläutert. Die Zeichnungen sind beispielhaft und sollen den Erfindungsgedanken zwar darlegen, ihn aber keinesfalls einengen oder gar abschließend wiedergeben.
- Fig. 1: zeigt eine schematische Ansicht eines Abschnittes einer erfindungsgemäßen Stranggießanlage,
- Fig. 2: zeigt eine schematische Ansicht einer erfindungsgemäßen Strangführung,
- Fig. 3: zeigt den schematischen Aufbau einer Steuereinrichtung des Standes der Technik,
- Fig. 4: zeigt Details des ersten Beobachters aus Fig. 3,
- Fig. 5: zeigt schematisch einen erfindungsgemäßen Kontrollkreis umfassend einen ersten und zweiten Beobachter,
- Fig. 6: zeigt den zeitlichen Verlauf verschiedener Größen bei der Regelung einer Stranggießanlage.

### Ausführung der Erfindung

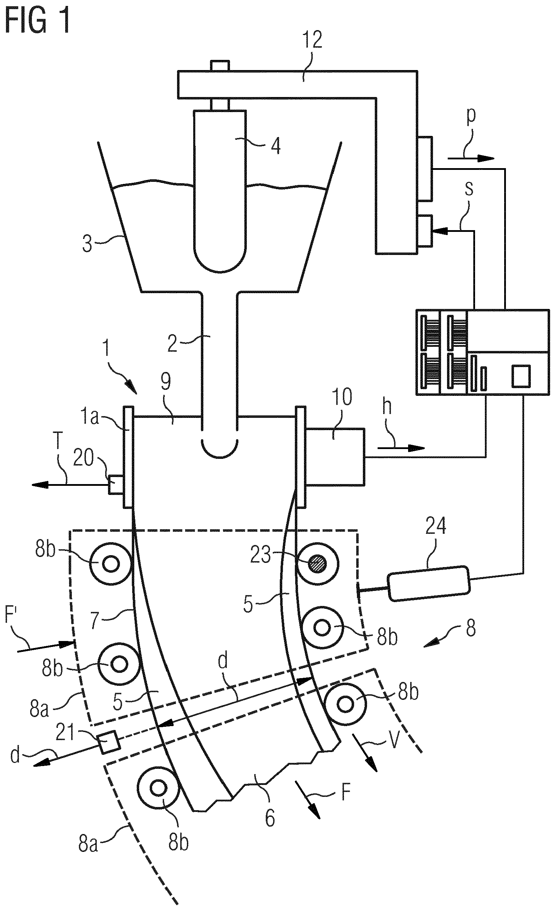

Gemäß Fig. 1 weist eine Stranggießanlage eine Kokille 1 auf. In die Kokille 1 wird über ein Tauchrohr 2 flüssiges Metall 3 gegossen, beispielsweise flüssiger Stahl oder flüssiges Aluminium. Der Zufluss des flüssigen Metalls 3 in die Kokille 1 wird mittels einer Zuflusseinrichtung 4 eingestellt. Dargestellt ist in Fig. 1 eine Ausgestaltung der Zuflusseinrichtung 4 als Verschlussstopfen. In diesem Fall entspricht eine Stellung p der Zuflusseinrichtung 4 einer Hubposition des Verschlussstopfens. Alternativ kann die Zuflusseinrichtung 4 als Schieber ausgebildet sein. In diesem Fall entspricht die Verschlussstellung p der Schieberposition.

Das in der Kokille befindliche flüssige Metall 3 wird mittels Kühleinrichtungen (nicht dargestellt) gekühlt, so dass es an Wänden 1a der Kokille 1 erstarrt und sich somit eine Strangschale bildet. Ein Kern 6 ist jedoch noch flüssig. Er erstarrt erst später. Die Strangschale 5 und der Kern 6 bilden zusammen einen Metallstrang 7. Der Metallstrang 7 wird mittels einer Strangführung 8 gestützt und aus der Kokille 9 abgezogen. Die Strangführung 8 ist der Kokille 1 nachgeordnet. Sie weist mehrere Rollensegmente 8a auf, die ihrerseits wieder Rollen 8b aufweisen. Von den Rollensegmenten 8a und den Rollen 8b sind in Fig. 1 nur einige wenige dargestellt. Mittels der Rollen 8b wird der Metallstrang 7 mit einer Abzugsgeschwindigkeit v aus der Kokille 1 ausgezogen.

Das flüssige Metall 3 bildet in der Kokille 1 einen Gießspiegel 9. Der Gießspiegel 9 soll möglichst konstant gehalten werden. Daher wird - sowohl im Stand der Technik als auch bei der vorliegenden Ausführungsvariante der Erfindung - die Stellung p der Zuflusseinrichtung 4 nachgeführt, um den Zufluss des flüssigen Metalls 3 in die Kokille 1 entsprechend einzustellen. Mittels einer (an sich bekannten) Messeinrichtung 10 wird eine Höhe h des Gießspiegels 9 erfasst. Die Höhe h wird einer Steuereinrichtung 11 für die Stranggießanlage zugeführt. Die Steuereinrichtung 11 ermittelt gemäß einem Regelverfahren, das nachstehend näher erläutert wird, eine Stellgröße S für die Zuflusseinrichtung 4. Die Zuflusseinrichtung 4 wird sodann von der Steuereinrichtung 11 entsprechend angesteuert. In der Regel gibt die Steuereinrichtung 11 die Stellgröße S an eine Verstelleinrichtung 12 für die Zuflusseinrichtung 4 aus. Bei der Verstelleinrichtung 12 kann es sich beispielsweise um eine Hydraulikzylindereinheit handeln. Frequenzen des Strangpumpens nach der Kokille werden messtechnisch erfasst und/oder gemäß f=v_{c}/p_{Roll}^{∗}n ermittelt, wobei V_{c} der Abzugsgeschwindigkeit des Stranges, f der Wölbungsfrequenz, n der Anzahl der harmonischen Frequenzen (1,2 etc.) und p_{Roll} den Rollenabständen entspricht.

Mittels Schwenkachse 23 und/oder Verstellvorrichtung 24 können die Rollenabstände, welche der eingezeichneten Strangdicke d entsprechen, gezielt angepasst werden. Dies kann, wie hier in Fig. 1 dargestellt, dadurch geschehen, dass im ersten Segment zumindest ein Rollensegment 8a einen feststehenden Außenrahmen aufweist, hier etwa das direkt unterhalb der Kokille 1 links gelegene Rollensegment 8a. Das gegenüber liegende Rollensegment 8a, bzw. der dieses tragende Innenrahmen, ist um eine Schwenkachse 23 verschwenkbar, die normal zur Zeichenebene verläuft. Die Schwenkachse 23 kann mit einer Drehachse einer Rolle 8b zusammenfallen, hier mit der Drehachse der oberen Rolle 8b, könnte aber selbstverständlich auch an einer anderen Stelle vorgesehen sein. Durch das Verschwenken ändert sich der Rollenabstand beim unteren Rollenpaar des obersten Rollensegments 8a in Fig. 1, während der Rollenabstand des oberen Rollenpaars gleich bleibt. Dies ist nicht nachteilig, weil die Änderung des Rollenabstands durch das erfindungsgemäße Verfahren in der Regel nur im Bereich von wenigen Zehntel-Millimetern bis zu 2 mm liegt.

Nicht in Fig. 1 eingezeichnet sind etwaige Führungsrollen, die direkt mit der Kokille verbunden sind und oberhalb des obersten hier dargestellten Rollensegments 8a angeordnet wären. Diese Führungsrollen sind aber in der Regel nicht zueinander und normal zur Strangführungsrichtung verstellbar

Alternativ zum Verschwenken könnte das linke oberste Rollensegment 8a, also etwa dessen Außenrahmen, fest sein und das rechte obere Rollensegment 8a, also etwa dessen Innenrahmen, normal zur Strangführungsrichtung zum linken Rollensegment 8a hin und von diesem weg parallel verschoben werden. Dadurch ändert sich der Rollenabstand aller Rollenpaare jeweils um den gleichen Betrag. Dies könnte ebenfalls mit einem oder mehreren (entlang der Strangbreite und/oder entlang der Strangführungsrichtung verteilte) hydraulischen Zylindern erfolgen.

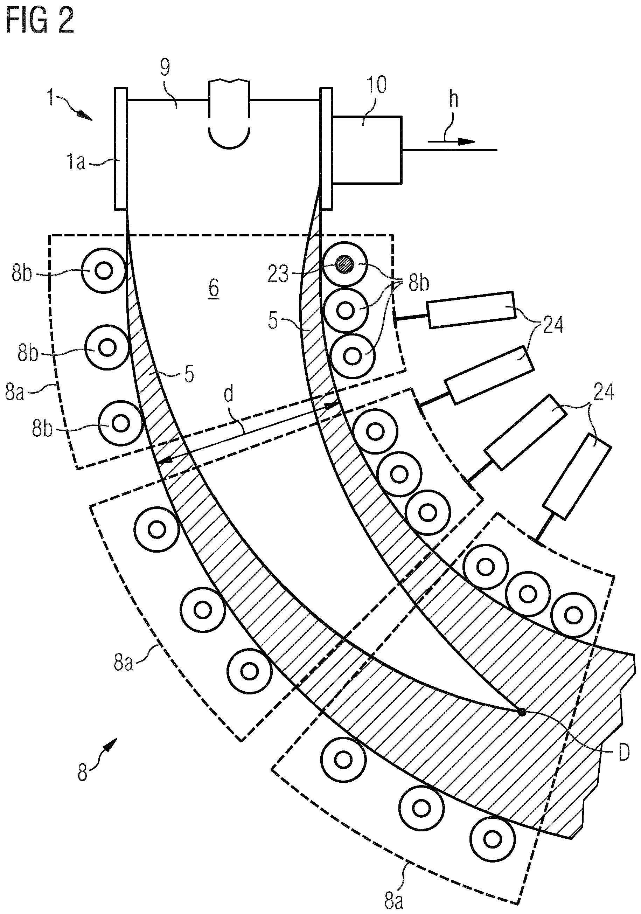

In Fig. 2 ist nur eine Strangführung 8 dargestellt, welche die Strangführung 8 in Fig. 1 ersetzen oder auch - nach dem obersten Segment - ergänzen kann. In Fig. 2 hat in jedem der drei dargestellten Segmente jedes Rollensegment 8a auf jeder Seite drei Rollen 8b. Es könnten aber auch nur zwei oder mehr als drei Rollen 8b pro Rollensegment 8a sein. In Fortsetzung zu Fig. 1 sind hier die feste Strangschale 5 und der flüssige Kern 6 des Strangs bis zum Durcherstarrungspunkt D dargestellt. Entsprechend sind auch in allen Segmenten 8a bis zum Durcherstarrungspunkt D Verstellvorrichtungen 24 vorgesehen. Die Verstellvorrichtungen 24 können die Rollensegmente 8a jeweils durch Verschwenken oder durch Parallelverschieben verstellen, wie bereits bei Fig. 1 erläutert. In diesem Beispiel wird das innere Rollensegment 8a des ersten (obersten) Segments durch Verschwenken um die Schwenkachse 23 verstellt, das innere Rollensegment 8a des zweiten Segments durch Parallelverschieben mittels zweier Verstellvorrichtungen 24. Die Verbindung der Verstellvorrichtungen 24 zur Steuereinrichtung 11 ist hier nicht eingezeichnet.

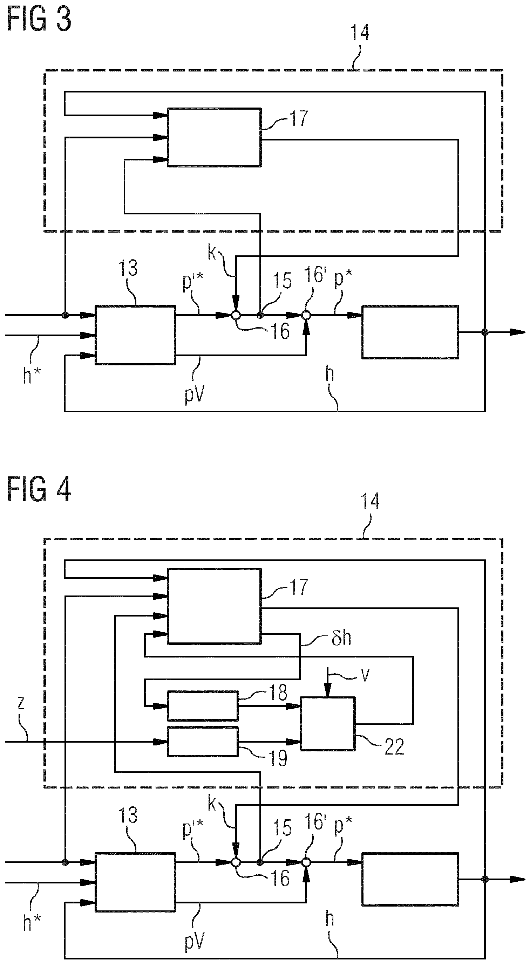

Die Steuereinrichtung 11 implementiert - siehe Fig. 3 - unter anderem einen Gießspiegelregler 13. Dem Gießspiegelregler 13 wird die Höhe h des Gießspiegels 9 zugeführt. Dem Gießspiegelregler 13 wird weiterhin ein Sollwert h* für die Höhe h des Gießspiegels 9 zugeführt. Dem Gießspiegelregler 13 werden weiterhin weitere Signale zugeführt. Die weiteren Signale können beispielsweise die Breite und die Dicke des gegossenen Metallstranges 7 (bzw. allgemeiner den Querschnitt des Metallstranges 7), die Abzugsgeschwindigkeit v (oder deren Sollwert), 1 und andere mehr sein. Der Gießspiegelregler 13 ermittelt sodann anhand der Abweichung der Höhe h des Gießspiegels 9 von dem Sollwert h* insbesondere eine vorläufige Sollstellung p'* für die Zuflusseinrichtung 4. Die weiteren Signale kann der Gießspiegelregler 13 zu seiner Parametrierung und/oder zur Ermittlung eines Vorsteuersignals pV heranziehen.

Die Steuereinrichtung 11 implementiert weiterhin einen ersten Beobachter 14. Dem ersten Beobachter 14 werden die Höhe h des Gießspiegels 9 und deren Sollwert h*, die weiteren Signale und eine endgültige Sollstellung p* für die Zuflusseinrichtung 4 zugeführt. Der erste Beobachter 14 ermittelt einen ersten Kompensationswert k. Der erste Kompensationswert k wird auf die vorläufige Sollstellung p'* aufgeschaltet und so die endgültige Sollstellung p* ermittelt. Anhand der Abweichung der Iststellung p von der endgültigen Sollstellung p* wird dann die Stellgröße S ermittelt, mit der die Zuflusseinrichtung 4 angesteuert wird. In der Regel implementiert die Steuereinrichtung 11 hierzu einen unterlagerten Positionsregler (nicht dargestellt).

Der guten Ordnung halber sei nochmals betont, dass es sich bei dem ersten und zweiten Beobachter 14, 25 nicht um Personen handelt, sondern um in der Steuereinrichtung 11 implementierte Funktionsblöcke.

Die Differenz zwischen der vorläufigen Sollstellung p'* und der endgültigen Sollstellung p* korrespondiert mit dem vom ersten Beobachter 14 ermittelten ersten Kompensationswert k. Da der erste Kompensationswert k vom ersten Beobachter 14 ermittelt wird und dem ersten Beobachter 14 daher bekannt ist, kann dem ersten Beobachter 14 alternativ zur endgültigen Sollstellung p* auch die vorläufige Sollstellung p'* zugeführt werden. Denn aufgrund des Umstands, dass der erste Kompensationswert k dem ersten Beobachter 14 bekannt ist, kann der erste Beobachter 14 ohne weiteres aus der vorläufigen Sollstellung p'* die endgültige Sollstellung p* ermitteln. Ein Abgreifpunkt 15, an dem die (vorläufige oder endgültige) Sollstellung p'*, p* abgegriffen wird, kann somit nach Bedarf vor oder nach einem Knotenpunkt 16 liegen, an dem der erste Kompensationswert k auf die vorläufige Sollstellung p'* aufgeschaltet wird. Der Abgreifpunkt 15 sollte jedoch vor einem Knotenpunkt 16' liegen, an dem das Vorsteuersignal pV aufgeschaltet wird.

Der erste Beobachter 14 weist einen Ermittlungsblock 17 auf. Dem Ermittlungsblock 17 werden die Höhe h des Gießspiegels 9, die weiteren Signale und die endgültige Sollstellung p* zugeführt. Der Ermittlungsblock 17 weist ein Modell der Stranggießanlage auf. Mittels des Modells ermittelt der Ermittlungsblock 17 anhand der weiteren Signale und der endgültigen Sollstellung p* eine erwartete (d.h. modellgestützt berechnete) Höhe für den Gießspiegel 9. Anhand der erwarteten Höhe ermittelt der Ermittlungsblock 17 sodann einen erwarteten (d.h. modellgestützt berechneten) Schwankungswert δh für die Höhe h des Gießspiegels 9, das heißt die kurzfristige Schwankung. Beispielsweise kann der Ermittlungsblock 17 eine Mittelung der Höhe h des Gießspiegels 9 vornehmen und den sich ergebenden Mittelwert von der erwarteten Höhe subtrahieren. Der ermittelte Schwankungswert δh spiegelt somit die erwartete Schwankung der Höhe h des Gießspiegels 9 wider. Anhand des Schwankungswerts δh ermittelt der Ermittlungsblock 17 sodann den ersten Kompensationswert k.

Die bisher in Verbindung mit Fig. 3 erläuterte Vorgehensweise entspricht der Vorgehensweise des Standes der Technik. Sie wird auch bei dieser Ausführungsvariante der vorliegenden Erfindung ergriffen. In Fig. 4 ist nochmals der erste Beobachter 14 mit dem Ermittlungsblock 17 dargestellt. Im Rahmen der vorliegenden Erfindung ist der Ermittlungsblock 17 entsprechend der Darstellung in Fig. 4 jedoch lediglich einer von mehreren Bestandteilen des ersten Beobachters 14. So weist der erste Beobachter 14 beispielsweise zusätzlich ein erstes Analyseelement 18 auf. Dem ersten Analyseelement 18 wird der Schwankungswert δh zugeführt. Das erste Analyseelement 18 ermittelt daraus die Frequenzanteile des Schwankungswerts δh. Vorzugsweise ist zusätzlich auch ein zweites Analyseelement 19 vorhanden. Dem zweiten Analyseelement 19 wird ein Zusatzsignal Z zugeführt. Das zweite Analyseelement 19 ermittelt daraus die Frequenzanteile des Zusatzsignals Z.

Bei dem Zusatzsignal Z kann es sich um eine Auszugskraft F handeln, mit der der Metallstrang 7 von den Rollen 8b der Strangführung 8 aus der Kokille 1 ausgezogen wird. Die Auszugskraft F ist parallel zur Abzugsgeschwindigkeit v gerichtet. Alternativ kann es sich um die Abzugsgeschwindigkeit v selbst handeln. Diese beiden Alternativen sind bevorzugt. Es ist jedoch ebenso möglich, als Zusatzsignal Z beispielsweise ein Kraftsignal F' heranzuziehen, mit dem (mindestens) eines der Rollensegmente 8a der Strangführung 8 beaufschlagt wird. Die Richtung, auf die das Kraftsignal F' bezogen ist, ist orthogonal zur Abzugsgeschwindigkeit v. Wiederum alternativ kann es sich bei dem Zusatzsignal Z um eine lokale Strangdicke d handeln, die mittels einer Messeinrichtung 21 in der Strangführung 8 gemessen wird. Das erste Analyseelement 18 führt die von ihm ermittelten Frequenzanteile einem Auswahlglied 22 zu. Falls vorhanden, gilt dies in analoger Weise auch für das zweite Analyseelement 19. Das Auswahlglied 22 ermittelt in Verbindung mit der Abzugsgeschwindigkeit v die zugehörigen Wellenlängen, die mit den Frequenzanteilen des Schwankungswerts δh und gegebenenfalls auch des Zusatzsignals Z korrespondieren. Die Abzugsgeschwindigkeit v wird zu diesem Zweck dem ersten Beobachter 14 und innerhalb des ersten Beobachters 14 dem Auswahlglied 22 zugeführt. Das Auswahlglied 22 ermittelt die Wellenlängen, bei denen der zugehörige Frequenzanteil des Schwankungswertes δh gegebenenfalls auch der zugehörige Frequenzanteil des Zusatzsignals Z oberhalb eines Schwellenwertes S1, S2 liegt. Der jeweilige Schwellenwert S1, S2 kann individuell für die Frequenzanteile des Schwankungswertes δh einerseits und die Frequenzanteile des Zusatzsignals Z andererseits bestimmt sein. Diese Wellenlängen werden vom Auswahlglied 22 vorselektiert. Innerhalb jeweils in sich zusammenhängender Bereiche von vorselektierten Wellenlängen des Schwankungswerts δh bestimmt das Auswahlglied 22 sodann diejenigen Wellenlängen λi (i = 1, 2, 3, ...), bei denen der jeweilige Frequenzanteil des Schwankungswerts δh ein Maximum annimmt. Die Anzahl an Wellenlängen λi ist nicht beschränkt. Diese Wellenlängen λi selektiert das Auswahlglied 22 (endgültig). Die selektierten Wellenlängen λi führt das Auswahlglied 22 dem Ermittlungsblock 17 zu. Der Ermittlungsblock 17 führt für die vom Auswahlglied 22 selektierten Wellenlängen λi eine Filterung der Höhe h des Gießspiegels 9 und der endgültigen Sollstellung p* durch. Den ersten Kompensationswert k ermittelt der Ermittlungsblock 17 lediglich anhand der gefilterten Höhe h des Gießspiegels 9 und der gefilterten endgültigen Sollstellung p*. Die anderen Frequenzanteile der Höhe h des Gießspiegels 9 und der endgültigen Sollstellung p* lässt der Ermittlungsblock 17 im Rahmen der Ermittlung des ersten Kompensationswerts k unberücksichtigt. Dem Auswahlglied 22 können weiterhin vorbestimmte Wellenbereiche vorgegeben sein. In diesem Fall stellen die vorbestimmten Wellenbereiche ein zusätzliches Auswahlkriterium dar. Insbesondere werden Wellenlängen, bei denen der zugehörige Frequenzanteil des Schwankungswertes δh gegebenenfalls auch der zugehörige Frequenzanteil des Zusatzsignals Z oberhalb des jeweiligen Schwellenwertes S1, S2 liegt, nur dann selektiert, wenn sie zusätzlich innerhalb eines der vorbestimmten Wellenlängenbereiche liegen. Anderenfalls werden sie auch dann nicht selektiert, wenn der zugehörige Frequenzanteil des Schwankungswertes δh gegebenenfalls auch der zugehörige Frequenzanteil des Zusatzsignals Z oberhalb des jeweiligen Schwellenwertes S1, S2 liegt.

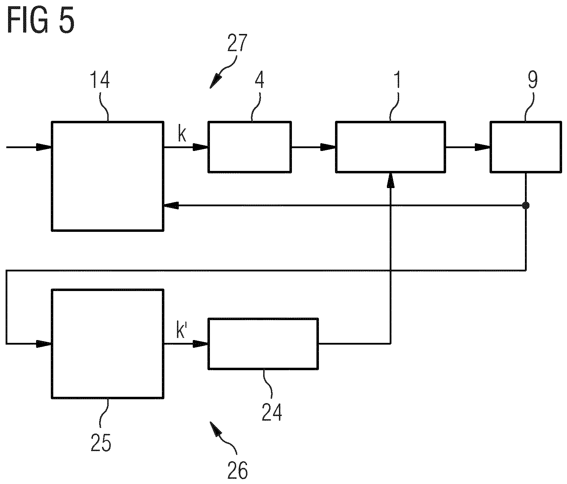

Wie bereits zuvor erwähnt, weist der zweite Beobachter 25 identische Bestandteile wie der erste Beobachter 14 auf, analysiert Frequenzen des Strangpumpens nach der Kokille 1 und gibt einen zweiten Kompensationswert k' für die Verstellvorrichtung 24 vor. In Fig. 5 ist ein Kontrollkreis dargestellt, der einen ersten und einen zweiten Beobachter 14, 25 umfasst. Der erste Beobachter 14 gibt einen ersten Kompensationswert k für die Zuflusseinrichtung 4 der Kokille 1 vor, wodurch der Gießspiegel 9 in der Kokille 1 geregelt wird. Vereinfacht gesagt stellen der erste Beobachter 14 und die Zuflusseinrichtung 4 der Kokille 1 zusammen ein Standard-System zur Regelung des Gießspiegels 9 der Kokille 1 dar, welches für die Kompensation von Frequenzen in dem ersten Frequenzbereich verwendet wird und stellt somit einen Controller 27 für Frequenzen des ersten Frequenzbereichs dar. Der zweite Beobachter 25, der mit der Verstellvorrichtung 24 verbunden ist, stellt einen Controller für Frequenzen des zweiten Frequenzbereichs 26 dar und gibt einen zweiten Kompensationswert k' vor.

Statt des ersten Beobachters 14, der die Zuflusseinrichtung 4 der Kokille 1 steuert bzw. regelt, könnte ein anderes Regelverfahren vorgesehen sein, und/oder statt des zweiten Beobachters 25, der die Verstellvorrichtung 24 der Rollen 8b steuert bzw. regelt, könnte ein anderes Regelverfahren vorgesehen sein.

Es könnte auch nur ein einziges Regelverfahren vorgesehen sein, dass nur die Verstellvorrichtung 24 der Rollen 8b steuert bzw. regelt, während die Zuflusseinrichtung 4 der Kokille 1 gar nicht zum Ausregeln der Schwankungen des Gießspiegels verwendet wird. Dieses einzige Regelverfahren könnte der zweite Beobachter 25 sein, aber auch ein anderes Steuer- oder Regelverfahren. Dabei würde der zweite Beobachter bzw. ein anderes alleiniges Steuer- oder Regelverfahren in der Regel einen größeren Frequenzbereich abdecken als bei zwei Regelverfahren. Dieser Frequenzbereich könnte dann z.B. die Frequenzen von 0 bis 0,6 Hz, von 0 bis 1 Hz, von 0 bis 2 Hz, von 0 bis 3 Hz, von 0 bis 4 Hz oder von 0 bis 5 Hz abdecken.

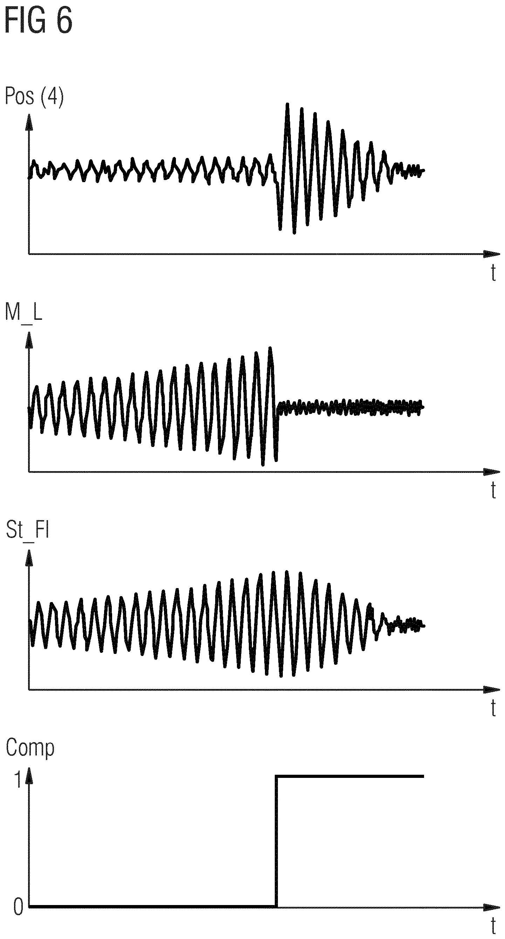

Fig. 6 zeigt ein Beispiel einer Unterdrückung von zyklischen Schwingungen. Entlang der waagrechten Achse ist die Zeit t aufgetragen. Entlang der senkrechten Achse ist in der ersten (obersten) Darstellung die Position der Zuflusseinrichtung 4, beschriftet mit "Pos (4)" dargestellt, in der zweiten Abbildung die Höhe des Gießspiegels in der Kokille 1, beschriftet mit "M_L", und in der dritten Abbildung der Stahlfluss aus der Kokille 1, beschriftet mit "St_Fl". Zum besseren Verständnis ist dieRegelung "Comp" zum Zeitpunkt t=0 noch deaktiviert und wird dann eingeschaltet, was in der letzten Abbildung mit den Zuständen "0" für die deaktivierte Regelung und "1" für die aktivierte Regelung dargestellt ist. In den ersten drei Darstellungen ist gut erkennbar, dass sich sowohl die Position der Zuflusseinrichtung 4 zyklisch ändert, als auch die Höhe des Gießspiegels und in der Folge auch der Stahlfluss aus der Kokille. Mit dem Aktivieren der Regelung, hier durch Änderung der Position "Pos (4)" der Zuflusseinrichtung 4, werden die zyklischen Schwankungen des Gießspiegels "M_L" verringert. Beim erfindungsgemäßen Verfahren würde man zum Verringern der Schwankungen des Gießspiegels zusätzlich oder alternativ zur Änderung der Position "Pos (4)" der Zuflusseinrichtung 4 entsprechend den gegenseitigen Abstand der Rollen 8b im obersten Segment zyklisch verändern.

### Bezugszeichenliste:

- 1: Kokille
- 1a: Wände der Kokille
- 2: Tauchrohr
- 3: flüssiges Metall
- 4: Zuflusseinrichtung
- 5: Strangschale
- 6: Kern
- 7: Metallstrang
- 8: Strangführung
- 8a: Rollensegmente
- 8b: Rollen
- 9: Gießspiegel
- 10: Messeinrichtung
- 11: Steuereinrichtung
- 12: Verstelleinrichtung
- 13: Gießspiegelregler
- 14: erster Beobachter
- 15: Abgreifpunkt
- 16, 16': Knotenpunkte
- 17: Ermittlungsblock
- 18, 19: Analyseelemente
- 20: Temperatursensor
- 21: Messeinrichtung
- 22: Auswahlglied
- 23: Schwenkachse
- 24: Verstellvorrichtung
- 25: zweiter Beobachter
- 26: Controller für Frequenzen des 2. Frequenzbereichs
- 27: Controller für Frequenzen des 1. Frequenzbereichs
- D: Durcherstarrungspunkt
- d: Strangdicke
- F: Auszugskraft
- F': Kraftsignal
- h: Höhe des Gießspiegels
- h*: Sollwert für die Höhe des Gießspiegels
- k: erster Kompensationswert
- k': zweiter Kompensationswert
- p: Stellung der Zuflusseinrichtung
- p*, p'*: Sollstellungen
- pV: Vorsteuersignal
- S: Stellgröße
- S1, S2: Schwellenwerte
- T: Temperatur
- v: Abzugsgeschwindigkeit
- Z: Zusatzsignal
- δh: Schwankungswert

## Patentansprüche

1. Verfahren zum Regeln einer Stranggießanlage,
wobei die Stranggießanlage eine Kokille (1) und eine der Kokille (1) nachgeordnete Strangführung (8) aufweist, wobei in die Kokille (1), insbesondere über eine Zuflusseinrichtung (4), flüssiges Metall (3) gegossen wird, das an Wänden (1a) der Kokille (1) erstarrt, so dass sich ein Metallstrang (7) mit einer erstarrten Strangschale (5) und einem noch flüssigem Kern (6) bildet,
wobei der Metallstrang (7) mittels beabstandet angeordneter Rollen (8b) der Strangführung (8) aus der Kokille (1) ausgezogen wird,
wobei eine Messgröße ermittelt wird, die mit der Schwankung des sich in der Kokille ausbildenden Gießspiegels korreliert, diese Messgröße unter Einbindung von zumindest einer Rechenvorschrift verarbeitet und zur Verringerung der Schwankungen des Gießspiegels herangezogen wird,
**dadurch gekennzeichnet, dass** zur Verringerung der Schwankungen des Gießspiegels der gegenseitige Abstand von einander gegenüberliegenden Rollen (8b) der Strangführung vor dem Durcherstarrungspunkt (D) zyklisch geändert wird, nämlich durch zyklische, den Schwankungen des Gießspiegels gegenläufige Änderung des Rollenabstands von einander gegenüberliegenden Rollen (8b) der Strangführung (8).

2. Verfahren nach Anspruch 1, **dadurch gekennzeichnet, dass** die zyklischen Änderungen in einem Frequenzbereich bis zu größer gleich 0,6 Hz, vorzugsweise bis 5 Hz, liegen.

3. Verfahren nach Anspruch 1 oder 2, **dadurch gekennzeichnet, dass** entlang der Strangführung (8) beidseitig mehrere Rollensegmente (8a) mit jeweils einer oder mehreren Rollen (8b) angeordnet sind, wobei zumindest ein Rollensegment (8a) normal zur Strangführungsrichtung verstellt wird.

4. Verfahren nach Anspruch 3, **dadurch gekennzeichnet, dass** zumindest ein Rollensegment (8a) des ersten Segments verstellt wird.

5. Verfahren nach Anspruch 3 oder 4, **dadurch gekennzeichnet, dass** zumindest ein Rollensegment (8a) verschwenkt wird.

6. Verfahren nach einem der Ansprüche 3 bis 5, **dadurch gekennzeichnet, dass** zumindest ein Rollensegment (8a) in paralleler Ausrichtung zu einem gegenüber liegenden Rollensegment (8a) verstellt wird.

7. Verfahren nach einem der Ansprüche 1 bis 6, **dadurch gekennzeichnet, dass** zumindest eine Rolle, insbesondere ein Rollensegment (8a), durch eine Verstellvorrichtung (24) verstellt wird, welche zumindest einen elektromechanischen oder hydraulischen Aktuator umfasst.

8. Verfahren nach einem der Ansprüche 1 bis 7, **dadurch gekennzeichnet, dass** Frequenzen der Schwankungen des Gießspiegels in einem Frequenzbereich von 0 bis 5Hz detektiert und die Schwankungen mittels zyklisch gegenläufiger Änderung des Rollenabstands von Rollen (8b) der Strangführung (8) ausgeglichen werden.

9. Verfahren nach einem der Ansprüche 1 bis 7, **dadurch gekennzeichnet, dass** Frequenzen der Schwankungen des Gießspiegels in einem ersten Frequenzbereich detektiert werden und die Schwankungen mittels zyklisch gegenläufiger Bewegungen der Zuflusseinrichtung (4) ausgeglichen werden, weitere Frequenzen der Schwankungen des Gießspiegels in einem zweiten Frequenzbereich detektiert und die Schwankungen mittels zyklisch gegenläufiger Änderung des Rollenabstands von Rollen (8b) der Strangführung (8) ausgeglichen werden, wobei der zweite Frequenzbereich über dem ersten Frequenzbereich liegt.

10. Vorrichtung zur Durchführung eines Verfahrens nach einem der Ansprüche 1-9, umfassend Mittel zur Einbringung einer Metallschmelze in eine Kokille (1), eine Strangführung (8) umfassend Rollen (8b), eine Messeinrichtung (10) zur Messung von Schwankungen des Gießspiegels, die mit einer Steuereinrichtung (11) verbunden ist, **dadurch gekennzeichnet, dass** eine mit der Steuereinrichtung (11) verbundene Verstellvorrichtung (24) vorgesehen ist, welche dazu ausgebildet ist Schwankungen des Gießspiegels durch zyklische, den Schwankungen des Gießspiegels gegenläufige Änderung des Rollenabstands von einander gegenüberliegenden Rollen (8b) der Strangführung (8) zu verringern, insbesondere auszugleichen.

11. Vorrichtung nach Anspruch 10, **dadurch gekennzeichnet, dass** die Verstellvorrichtung (24) für zyklische Änderungen des Rollenabstands in einem Frequenzbereich bis zu größer gleich 0,6 Hz, vorzugsweise bis 5 Hz, ausgelegt ist.

12. Vorrichtung nach Anspruch 10 oder 11, **dadurch gekennzeichnet, dass** die Verstellvorrichtung (24) zumindest einen hydraulischen oder elektromechanischen Aktuator umfasst.

13. Vorrichtung nach einem der Ansprüche 10 bis 12, **dadurch gekennzeichnet, dass** entlang der Strangführung (8) beidseitig mehrere Rollensegmente (8a) mit jeweils einer oder mehreren Rollen (8b) angeordnet sind, wobei zumindest ein Rollensegment (8a) mittels der Verstellvorrichtung (24) normal zur Strangführungsrichtung verstellbar ist.

14. Vorrichtung nach Anspruch 13, **dadurch gekennzeichnet, dass** zumindest ein Rollensegment (8a) des ersten Segments verstellbar ist.

15. Vorrichtung nach Anspruch 13 oder 14, **dadurch gekennzeichnet, dass** zumindest ein Rollensegment (8a) verschwenkbar ist.

16. Vorrichtung nach einem der Ansprüche 13 bis 15, **dadurch gekennzeichnet, dass** zumindest ein Rollensegment (8a) in paralleler Ausrichtung zu einem gegenüber liegenden, entlang der Strangführung (8) angeordneten Rollensegment (8a) verstellbar ist.

17. Vorrichtung nach einem der Ansprüche 10 bis 16, **dadurch gekennzeichnet, dass** mittels der Messeinrichtung (10) Frequenzen der Schwankungen des Gießspiegels in einem ersten Frequenzbereich detektierbar sind und diese Schwankungen mittels zyklisch gegenläufiger Bewegungen einer Zuflusseinrichtung (4) der Kokille (1) ausgleichbar sind, und dass mittels der Messeinrichtung (10) weitere Frequenzen der Schwankungen des Gießspiegels in einem zweiten Frequenzbereich detektierbar sind und diese Schwankungen mittels zyklisch gegenläufiger Änderung des Rollenabstands von Rollen (8b) der Strangführung (8) mittels der Verstellvorrichtung (24) ausgleichbar sind, wobei der zweite Frequenzbereich über dem ersten Frequenzbereich liegt.

## Claims

1. Method for regulating a strand casting plant,
wherein the strand casting plant comprises a mold (1) and a strand guide (8) downstream of the mold (1),
wherein liquid metal (3) is poured into the mold (1), in particular via an inflow unit (4), which liquid metal solidifies on walls (1a) of the mold (1), so that a metal strand (7) having a solidified strand shell (5) and a still liquid core (6) forms,
wherein the metal strand (7) is drawn out of the mold (1) by means of rollers (8b) of the strand guide (8) arranged spaced apart,
wherein a measured variable is determined, which correlates with the variation of the casting level forming in the mold, this measured variable is processed with incorporation of at least one computing rule and is used to reduce the variations of the casting level,
**characterized in that** the mutual spacing of opposing rollers (8b) of the strand guide before the complete solidification point (D) is cyclically changed to reduce the variations of the casting level, namely by cyclic change, opposing the variations of the casting level, of the roller spacing of opposing rollers (8b) of the strand guide (8).

2. Method according to Claim 1, **characterized in that** the cyclic changes are in a frequency range up to greater than or equal to 0.6 Hz, preferably up to 5 Hz.

3. Method according to Claim 1 or 2, **characterized in that** multiple roller segments (8a) each having one or more rollers (8b) are arranged on both sides along the strand guide (8), wherein at least one roller segment (8a) is adjusted normally in relation to the strand guide direction.

4. Method according to Claim 3, **characterized in that** at least one roller segment (8a) of the first segment is adjusted.

5. Method according to Claim 3 or 4, **characterized in that** at least one roller segment (8a) is pivoted.

6. Method according to any one of Claims 3 to 5, **characterized in that** at least one roller segment (8a) is adjusted in parallel alignment in relation to an opposing roller segment (8a).

7. Method according to any one of Claims 1 to 6, **characterized in that** at least one roller, in particular a roller segment (8a), is adjusted by an adjustment device (24), which comprises at least one electromechanical or hydraulic actuator.

8. Method according to any one of Claims 1 to 7, **characterized in that** frequencies of the variations of the casting level in a frequency range from 0 to 5 Hz are detected and the variations are offset by means of cyclically opposing change of the roller spacing of rollers (8b) of the strand guide (8).

9. Method according to any one of Claims 1 to 7, **characterized in that** frequencies of the variations of the casting level in a first frequency range are detected and the variations are offset by means of cyclically opposing movements of the inflow unit (4), further frequencies of the variations of the casting level in a second frequency range are detected and the variations are offset by means of cyclically opposing change of the roller spacing of rollers (8b) of the strand guide (8), wherein the second frequency range is greater than the first frequency range.

10. Device for carrying out a method according to any one of Claims 1 to 9, comprising means for introducing a metal melt into a mold (1), a strand guide (8) comprising rollers (8b), a measuring unit (10) for measuring variations of the casting level, which is connected to a control unit (11), **characterized in that** an adjustment device (24) connected to the control unit (11) is provided, which is designed to reduce, in particular offset variations of the casting level by cyclic change, opposing the variations of the casting level, of the roller spacing of opposing rollers (8b) of the strand guide (8).

11. Device according to Claim 10, **characterized in that** the adjustment device (24) is designed for cyclic changes of the roller spacing in a frequency range up to greater than or equal to 0.6 Hz, preferably up to 5 Hz.

12. Device according to Claim 10 or 11, **characterized in that** the adjustment device (24) comprises at least one hydraulic or electromechanical actuator.

13. Device according to any one of Claims 10 to 12, **characterized in that** multiple roller segments (8a) each having one or more rollers (8b) are arranged on both sides along the strand guide (8), wherein at least one roller segment (8a) is adjustable normally in relation to the strand guide direction by means of the adjustment device (24).

14. Device according to Claim 13, **characterized in that** at least one roller segment (8a) of the first segment is adjustable.

15. Device according to Claim 13 or 14, **characterized in that** at least one roller segment (8a) is pivotable.

16. Device according to any one of Claims 13 to 15, **characterized in that** at least one roller segment (8a) is adjustable in parallel alignment in relation to an opposing roller segment (8a) arranged along the strand guide (8).

17. Device according to any one of Claims 10 to 16, **characterized in that** frequencies of the variations of the casting level in a first frequency range are detectable by means of the measuring unit (10) and these variations can be offset by means of cyclically opposing movements of an inflow unit (4) of the mold (1), and **in that** further frequencies of the variations of the casting level in a second frequency range are detectable by means of the measuring unit (10) and these variations can be offset by means of cyclically opposing change of the roller spacing of rollers (8b) of the strand guide (8) by means of the adjustment device (24), wherein the second frequency range is greater than the first frequency range.

## Revendications

1. Procédé de régulation d'une installation de coulée continue,
l'installation de coulée continue comprenant une lingotière (1) et un guidage de barre (8) disposé en aval de la lingotière (1), du métal liquide (3) étant coulé dans la lingotière (1), notamment par le biais d'un dispositif d'alimentation (4), lequel métal se solidifie au niveau de parois (1a) de la lingotière (1) de sorte qu'il se forme une barre métallique (7) présentant une croûte solidifiée (5) et un noyau (6) encore liquide,
dans lequel la barre métallique (7) est retirée de la lingotière (1) au moyen de rouleaux (8b) du guidage de barre (8) situés à distance les uns des autres,
dans lequel une grandeur de mesure est déterminée, qui est corrélée avec la fluctuation du niveau de métal se formant dans la lingotière, cette grandeur de mesure étant traitée en intégrant au moins une règle de calcul et étant utilisée pour la réduction des fluctuations du niveau de métal,
**caractérisé en ce que**, pour réduire les fluctuations du niveau de métal, la distance réciproque de rouleaux (8b) du guidage de barre opposés l'un à l'autre est modifiée cycliquement en amont du point de solidification totale (D), en l'occurrence par modification cyclique,
contraire aux fluctuations du niveau de métal, de la distance entre rouleaux de rouleaux (8b) du guidage de barre (8) opposés l'un à l'autre.

2. Procédé selon la revendication 1, **caractérisé en ce que** les modifications cycliques se situent dans une gamme de fréquences allant jusqu'à des fréquences supérieures ou égales à 0,6 Hz, de préférence allant jusqu'à 5 Hz.

3. Procédé selon la revendication 1 ou 2, **caractérisé en ce que** plusieurs segments à rouleaux (8a) comprenant à chaque fois un ou plusieurs rouleaux (8b) sont disposés le long du guidage de barre (8) sur les deux côtés, au moins un segment à rouleaux (8a) étant déplacé perpendiculairement à la direction de guidage de barre.

4. Procédé selon la revendication 3, **caractérisé en ce qu'**au moins un segment à rouleaux (8a) du premier segment est déplacé.

5. Procédé selon la revendication 3 ou 4, **caractérisé en ce qu'**au moins un segment à rouleaux (8a) est pivoté.

6. Procédé selon l'une des revendications 3 à 5, **caractérisé en ce qu'**au moins un segment à rouleaux (8a) est déplacé en alignement parallèle par rapport à un segment à rouleaux (8a) opposé.

7. Procédé selon l'une des revendications 1 à 6, **caractérisé en ce qu'**au moins un rouleau, notamment un segment à rouleaux (8a), est déplacé grâce à un dispositif de déplacement (24) qui comprend au moins un actionneur électromécanique ou hydraulique.

8. Procédé selon l'une des revendications 1 à 7, **caractérisé en ce que** des fréquences des fluctuations du niveau de métal sont détectées dans une gamme de fréquences allant de 0 Hz à 5 Hz et les fluctuations sont compensées grâce à une modification cycliquement contraire de la distance entre rouleaux de rouleaux (8b) du guidage de barre (8).

9. Procédé selon l'une des revendications 1 à 7, **caractérisé en ce que** des fréquences des fluctuations du niveau de métal sont détectées dans une première gamme de fréquences et les fluctuations sont compensées grâce à des mouvements cycliquement contraires du dispositif d'alimentation (4), d'autres fréquences des fluctuations du niveau de métal sont détectées dans une seconde gamme de fréquences et les fluctuations sont compensées grâce à une modification cycliquement contraire de la distance entre rouleaux de rouleaux (8b) du guidage de barre (8), la seconde gamme de fréquences se situant au-dessus de la première gamme de fréquences.

10. Dispositif pour exécuter un procédé selon l'une des revendications 1-9, comprenant des moyens d'introduction d'un bain de fusion dans une lingotière (1), un guidage de barre (8) comprenant des rouleaux (8b), un dispositif de mesure (10), destiné à mesurer des fluctuations du niveau de métal, qui est relié à un dispositif de commande (11), **caractérisé en ce qu'**il est prévu un dispositif de déplacement (24) relié au dispositif de commande (11), qui est réalisé pour réduire, notamment pour compenser, des fluctuations du niveau de métal par modification cyclique, contraire aux fluctuations du niveau de métal, de la distance entre rouleaux de rouleaux (8b) du guidage de barre (8) opposés les uns aux autres.

11. Dispositif selon la revendication 10, **caractérisé en ce que** le dispositif de déplacement (24) est conçu pour des modifications cycliques de la distance entre rouleaux dans une gamme de fréquences allant jusqu'à des fréquences supérieures ou égales à 0,6 Hz, de préférence allant jusqu'à 5 Hz.

12. Dispositif selon la revendication 10 ou 11, **caractérisé en ce que** le dispositif de déplacement (24) comprend au moins un actionneur hydraulique ou électromécanique.

13. Dispositif selon l'une des revendications 10 à 12, **caractérisé en ce que** plusieurs segments à rouleaux (8a) comprenant à chaque fois un ou plusieurs rouleaux (8b) sont disposés le long du guidage de barre (8) sur les deux côtés, au moins un segment à rouleaux (8a) pouvant être déplacé perpendiculairement à la direction de guidage de barre au moyen du dispositif de déplacement (24).

14. Dispositif selon la revendication 13, **caractérisé en ce qu'**au moins un segment à rouleaux (8a) du premier segment peut être déplacé.

15. Dispositif selon la revendication 13 ou 14, **caractérisé en ce qu'**au moins un segment à rouleaux (8a) peut être pivoté.

16. Dispositif selon l'une des revendications 13 à 15, **caractérisé en ce qu'**au moins un segment à rouleaux (8a) peut être déplacé en alignement parallèle par rapport à un segment à rouleaux (8a) opposé situé le long du guidage de barre (8).

17. Dispositif selon l'une des revendications 10 à 16, **caractérisé en ce que** le dispositif de mesure (10) permet de détecter des fréquences des fluctuations du niveau de métal dans une première gamme de fréquences et ces fluctuations peuvent être compensées grâce à des mouvements cycliquement contraires d'un dispositif d'alimentation (4) de la lingotière (1), et **en ce que** le dispositif de mesure (10) permet de détecter d'autres fréquences des fluctuations du niveau de métal dans une seconde gamme de fréquences et ces fluctuations peuvent être compensées grâce à une modification cycliquement contraire de la distance entre rouleaux de rouleaux (8b) du guidage de barre (8) au moyen du dispositif de déplacement (24), la seconde gamme de fréquences se situant au-dessus de la première gamme de fréquences.
